# EUROPÄISCHE PATENTANMELDUNG

(11) **EP 1 189 042 A1**
(43) Veröffentlichungstag der Anmeldung: **20.03.2002**
(21) Anmeldenummer: 00890281.9
(22) Anmeldetag: 15.09.2000
(51) Int. Cl.: G01G 19/44

(54) **Personenwiegeeinrichtung an einer Klosettbrille**

(71) Anmelder: Koller, Tom, 1140 Wien (AT)
(72) Erfinder: Koller, Tom, 1140 Wien (AT)
(74) Vertreter: Patentanwälte BARGER, PISO & PARTNER

(57) **Zusammenfassung**

Die Waage ist in eine Toilettenbrille (1) eingebaut, die mittels eines Scharniers (3) an einer Toilettenmuschel (2) schwenkbar befestigt ist und in Gebrauchsstellung mittels Abstandhaltern (4) auf der Toilettenmuschel (2) aufliegt.

## Beschreibung

Die Erfindung betrifft eine Personenwaage. Personenwaagen sind üblicherweise flächige Gebilde, die am Boden stehen und über eine Standfläche, eine Wiegevorrichtung und eine Anzeige verfügen. Personen, die sich wiegen wollen, stellen sich auf die Standfläche und lesen von der Anzeige das Gewicht ab.

Es gibt unterschiedliche Meßmethoden, mechanische oder nicht mechanische, beispielsweise auf dem Piezzoeffekt oder der Widerstandsänderung deformierter Dehnmeßstreifen beruhende Wägeverfahren, entsprechend ist auch die Anzeige entweder mechanischer Natur oder elektrisch.

In Ausgestaltungen ist bei verschiedenen Personenwaagen vorgesehen, daß das gemessene Gewicht einer Person zugeordnet und gespeichert werden kann, um so Änderungen des Gewichtes leichter dokumentieren zu können. Zur Erleichterung der Ablesbarkeit ist es auch bekannt, die Anzeige getrennt von der eigentlichen Wiegevorrichtung vorzusehen und an der Wand oder einem Möbel in Augenhöhe zu montieren, dabei kann die Datenübertragung mittels Kabel oder Infrarot, aber auch mittels Ultraschall oder Funk erfolgen.

All diese Verfahren und Vorrichtungen haben verschiedene Vor- und Nachteile, darunter alle gemeinsam den, daß die Waage einen Stellplatz benötigt und auf einer ebenen Fläche positioniert sein muß, um richtig zu funktionieren. Da immer wieder an den Aufstellungsorten die, wie beispielsweise im Badezimmer, über einen gefliesten Boden oder einen Teppichboden verfügen, Höhenunterschiede auftreten, kommt es immer wieder zu Abweichungen im Meßergebnis, die nur auf der momentanen Positionierung der Waage beruhen.

Die Erfindung bezweckt, eine Waage vorzuschlagen, die ohne zusätzlichen Platzbedarf zur Verfügung steht und auch von den Unebenheiten des Aufstellungsortes unabhängig ist.

Erfindungsgemäß werden diese Ziele dadurch erreicht, daß die Waage in einer Toilettenbrille derart integriert ist, daß die, üblicherweise drei bis fünf, Auflagepunkte der Toilettenbrille auf der Toilettenmuschel als Meßsensoren ausgebildet sind bzw. mit solchen Meßsensoren verbunden sind, und daß die Anzeige des Gewichtes entweder im mittleren vordersten Bereich der Toilettenbrille oder, bei drahtloser Datenübertragung, an einem externen Anzeigegerät angezeigt wird.

Die oberen Ränder von Toilettenmuscheln sind mit wesentlich höherer Genauigkeit eben und waagrecht angeordnet als die Fußböden von Badezimmern oder Toiletten, vor allem ist durch die immer gleiche Auflage der Toilettenbrille auf der Toilettenmuschel eine immer gleiche Position der Waage während des Wiegens gewährleistet, sodaß Gewichtsänderungen wesentlich genauer als mit bisher im Haushalt verfügbaren Personenwaagen erfaßt werden können.

Als Meßsensoren können die üblicherweise schon heute bei Personenwaagen verwendeten Meßsensoren verwendet werden, diese sind in ihren Abmessungen so kompakt, daß eine Unterbringung in einer Toilettenbrille problemlos möglich ist. Die Toilettenbrille bietet auch genügend Platz für die Unterbringung der gesamten Meßelektronik und die zum Betrieb notwendige Batterie, sodaß für den Fachmann auf dem Gebiete der Herstellung von Personenwaagen in Kenntnis der Erfindung die Herstellung einer solchen Waage keine Probleme bereitet.

In einer Ausgestaltung ist vorgesehen, daß Scharnier der Toilettenbrille biegeweich auszugestalten, um sicherzustellen, daß auch bei nicht völlig einwandfreier Montage der Toilettenbrille während des Wiegens keine merklichen Kräfte von der Aufhängungs- und Schwenkvorrichtung auf die einzelnen Meßsensoren übertragen werden.

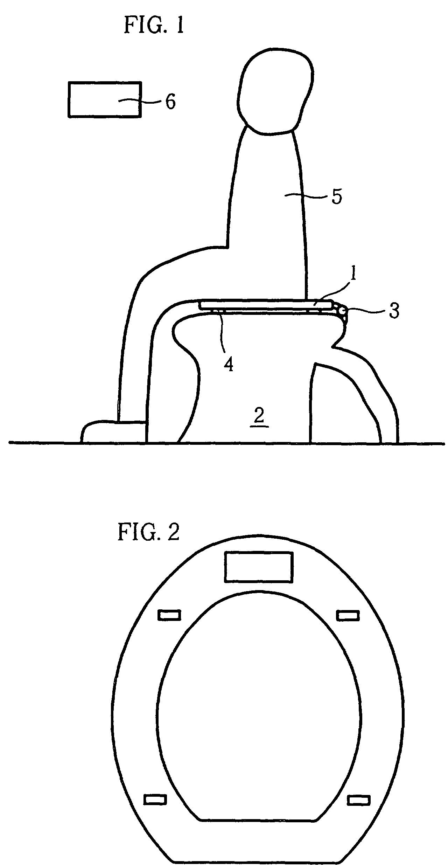

Die Erfindung wird im folgenden an Hand einer Zeichnung näher erläutert. Dabei zeigt Fig. 1, rein schematisch, eine Seitenansicht und
Fig. 2 eine Draufsicht auf eine erfindungsgemäße Toilettenbrille.

Wie aus Fig. 1 ersichtlich ist, ist eine im wesentlichen einer üblichen Toilettenbrille entsprechende erfindungsgemäße Toilettenbrille 1 mittels eines üblichen Scharniers 3 auf einer Toilettenmuschel 2 befestigt.

Die üblicherweise auf der Unterseite der Toilettenbrille angeordneten Abstandhalter 4 aus Kunststoff bzw. Gummi sind erfindungsgemäß durch Meßsensoren ersetzt bzw. über solche Meßsensoren in der Toilettenbrille 1 gelagert.

Wenn ein Benutzer 5 sein Gewicht bestimmen will, so setzt er sich auf die Toilettenbrille, hebt die Beine an und aktiviert mittels eines Schalters, der im dargestellten Ausführungsbeispiel in Form einer Anzeige- und Schalteinheit 6 an der Wand befestigt ist, die in der Toilettenbrille 1 angeordnete Waage. Das Ergebnis der Wägung wird mittels Infrarot oder Funkübertragung an die Anzeige- und Schalteinheit 6 übertragen und dort beispielsweise durch einen LCD-Leuchtschirm angezeigt. Dabei kann vorgesehen werden, daß das Gewicht einer bestimmten Person zugeordnet und gespeichert oder auf irgendeine Weise für einen Diätplan verarbeitet wird.

In einer Ausgestaltung ist es möglich, die Anzeige samt Schalter als Einheit 6' im vordersten, bei der Benutzung zwischen den Beinen des Benutzers angeordneten Bereich der Toilettenbrille 1 anzuordnen, sodaß die Datenübertragung entfällt.

Wie oben ausgeführt, wird bevorzugt das Scharnier 3 so mit der Toilettenbrille 1 verbunden, daß während der Benutzung der Toilettenbrille 1 als Waage möglichst keine vertikalen Kräfte vom Scharnier in die Toilettenbrille eingeleitet werden, um die Wägung nicht zu verfälschen.

Die Stromversorgung der Toilettenbrille 1 erfolgt bevorzugt über eine Batterie, die in einem nicht dargestellten Batteriefach in der Toilettenbrille 1 untergebracht wird, das Batteriefach ist dabei gegen das Eindringen von Spritzwasser zu schützen oder abzudichten, was aber kein großes Problem ist.

## Patentansprüche

1. Personenwaage, **dadurch gekennzeichnet, daß** sie in eine Toilettenbrille (1) eingebaut ist, die mittels eines Scharniers (3) an einer Toilettenmuschel (2) schwenkbar befestigt ist und in Gebrauchsstellung mittels Abstandhaltern (4) auf der Toilettenmuschel (2) aufliegt.

2. Personenwaage nach Anspruch 1, **dadurch gekennzeichnet, daß** die Abstandhalter (4) als Meßsensoren für das von ihnen getragene Gewicht ausgebildet sind.

3. Personenwaage nach Anspruch 1, **dadurch gekennzeichnet, daß** die Abstandhalter (4) mit Meßsensoren für das von ihnen getragene Gewicht verbunden sind.

4. Personenwaage nach einem der voranstehenden Ansprüche, **dadurch gekennzeichnet, daß** das Scharnier (3) im Bereich der Toilettenbrille (1) biegeweich ausgebildet ist.
